# EUROPÄISCHE PATENTANMELDUNG

(11) **EP 1 596 124 A1**
(43) Veröffentlichungstag der Anmeldung: **16.11.2005**
(21) Anmeldenummer: 04011452.2
(22) Anmeldetag: 13.05.2004
(51) Int. Cl.: F21S 8/10, F21V 5/00

(54) **Umrandungshilfslicht der Lampen eines Kraftwagens**

(71) Anmelder: GRANG FAIR INDUSTRIAL CO., LTD., Pan-Chiao, Taipei (TW)
(72) Erfinder: Yeh, Keng-Chin, Pan-Chiao Taipei (TW)
(74) Vertreter: Kador & Partner

(57) **Zusammenfassung**

Die Erfindung betrifft ein Hilfswarnungslicht für eine Lampe oder einen Lampensatz eines Kraftwagens, die oder deren jede Lampe jeweils ein sie umgebendes Hilfslicht aus einer Umrandungsaufnahme 12 mit einer zentralen Öffnung 11 für die Lampe, einer an der Stirnseite derselben gehaltenen lichtdurchlassigen Umrandungsscheibe 2 mit einer lichtstreuenden Strukturierung 22, und mindestens einer eigenen Lichtquelle 3 aufweist, dadurch gekennzeichnet, daß die Lampe oder der Lampensatz an einem Lampenhalter 1 gehalten ist, an dem die Umrandungsaufnahme 12 für die oder jede Lampe angeformt ist und der in einem Innenraum aufgenommen ist, der durch ein dem Lampenhalter 1 nachgeordnetes Gehäuse 13 und eine dem Lampenhalter 1 vorgeordnete lichtdurchläßige Abdeckung 15 umschlossen ist, wobei das Gehäuse 13 daran angeformte Fassungen 131 und die Umrandungsaufnahmej12 daran angebrachte Schlitzen 122 jeweils für die Lichtquellen aufweist.

## Beschreibung

### [Technisches Gebiet]

Die Erfindung betrifft ein Umrandungshilfslicht der Lampen eines Kraftwagens, das an einer eine Lampe umgebenden Umrandung derselben zur Erhöhung ihrer Warnungswirkung angeordnet ist, mit mindestens einer eigenen Lichtquelle, einer stirnseitigen ringförmigen lichtdurchlässigen Umrandungsscheibe und einer Umrandungsaufnahme der Lampe, nach dem Oberbegriff des Anspruchs 1.

### [Stand der Technik]

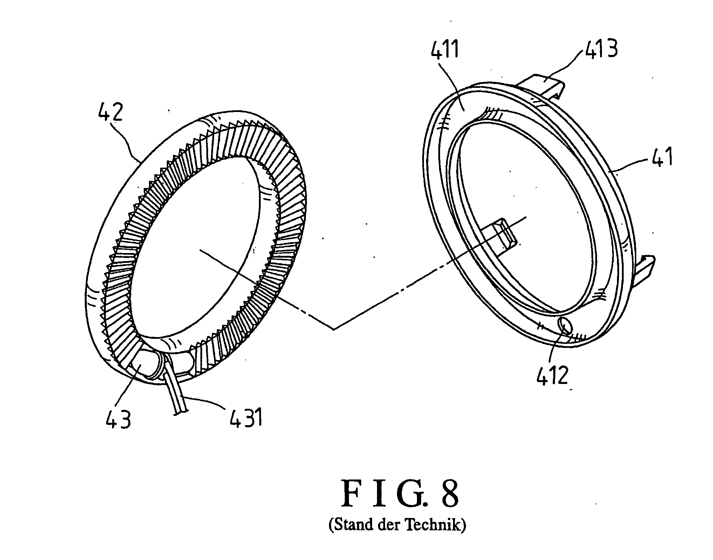

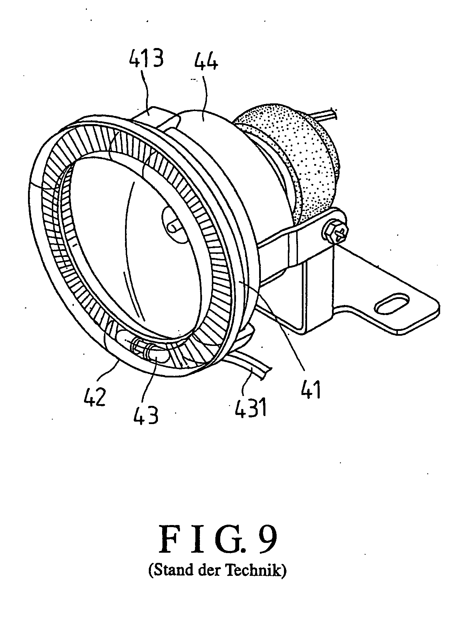

Zur Erhöhung der Warnungswirkung einer Signallampe eines Kraftwagens, bei der es sich um ein Standlicht, ein Bremslicht, einen Blinker, ein Rücklicht usw. handeln kann, ist darum ein Hilfslicht vorgesehen, das wie in Figuren 8 und 9 gezeigt eine ringförmige Umrandungsaufnahme 41 für die Lampe 44, die in der zentraler Öffnung derselben aufgenommen ist, eine in einer Aufnahmenut 411 der Umrandungsaufnahme 41 aufgenommene lichtdurchlässige ringförmige Umrandungsscheibe 42, und mindesten eine eigene Lichtquelle 43 in Form von LED's 43 aufweist, die durch eine Gußmasse in der Umrandungsaufnahme 41 festgelegt werden. Die Umrandungsaufnahme 411 weist eine Anzahl(in Figur 8 drei) von rotationssymmetrischen Rasthaken 412 zu ihrer Halterung am Umfang der Lampe 44, und einen Durchbruch 412 für die Drähte 431 für den elektrischen Anschluß der LED's auf. Zur Streuung des Lichts aus den LED's 43 über die Umrandungsscheibe 42 weist diese an ihrer der Umrandungsaufnahme 41 zugewandten Innenseite eine verzahnte Strukturierung auf, wodurch die Lichtstrahlen der punktförmige Lichtquelle ein ringförmiges helliges Umrandungsbild auf der Stirnseite der Umrandungsscheibe 42 darstellt.

Ein derartiges Umrandungshilfslicht hat die folgenden Nachteile:
1) Da die Lichtquelle 43 durch eine Gußmasse in der Umrandungsaufnahme 42 permanent eingebettet ist, muß das gesamte Hilfslicht ausgetauscht werden, auch wenn nur ein einziges LED außer Betrieb ist oder gestört wird.
2) Da die Gußmasse nur eine schlechte Lichtleitfähigkeit hat, ist ein seitlicher Durchtritt des vom LED emittierten Lichts(d.h. in der axialen bzw. radialen Richtung der Umrandungsscheibe 42) durch die Gußmasse sehr schwach. Infolgedessen ist das dadurch entstehende Hilfswarnungsbild nicht eine gleichmäßige lichtende Ringform, weil die Umrandungsscheibe 42 im Bereich der LED's 43 dunkel bleibt.
3) Ebenfalls dunkel ist im Bereich der Elektroden am Ende der beiden LED's, 431 mit dem sie einander zugewandt sind.
4) Man kann aus der ungleichmäßigen Helligkeit des Umrandungsbildes auf der Umrandungsscheibe 42 die Stellung der Lichtsquelle 43 entnehmen, was die Ästhetik des Hilfslichts negativ beeinflussen kann.

Die Erfindung liegt daher die Aufgabe zugrunde, ein Umrandungshilfslicht der o.g., Gattung zu schaffen, mit dem die vorbeschriebenen Nachteile vermieden oder beseitigt werden.

Die Aufgabe wird bei einer Lampe oder einem Lampensatz eines Kraftwagens nach dem Stand der Technik, die oder deren jede Lampe jeweils ein sie umgebendes Hilfslicht aus einer ringförmigen Umrandungsaufnahme mit einer zentralen Öffnung für die Lampe, einer an der Stirnseite derselben gehaltenen lichtdurchlässigen Umrandungsscheibe mit einer lichtstreuenden Strukturierung, und mindestens einer eigenen Lichtquelle aufweist, erfindungsgemäß durch die kennzeichenden Merkmale des Anspruchs 1 dadurch gelöst, daß die Lampe oder der Lampensatz an einem Lampenhalter gehalten ist, an dem die Umrandungsaufnahme für die oder für jede Lampe angeformt ist und der in einem Innenraum aufgenommen ist, der durch ein dem Lampenhalter nachgeordnetes Gehäuse und eine dem Lampenhalter vorgeordnete lichtdurchlässige Abdeckung umschlossen ist, wobei das Gehäuse daran angeformte Fassungen und die Umrandungsaufnahme daran angebrachte Schlitzen jeweils für die Lichtquellen aufweist.

Gemäß einer vorteilhafte Weiterbildung der Erfindung ist die Stukturierung durch eine Vielzahl von halbkugelförmigen Erhebungen gebildet, die auf der der Umrandungsaufnahme abgewandten Stirnseite der Umrandungsscheibe mit gleichem Abstand voneinander angeordnet sind.

Eine weitere Ausgestaltung der Erfindung sieht vor, daß zur parallene Fokusierung des von einer Lichtquelle emittierten Lichtstrahls diese durch eine Kappe umschlossen wird, die an ihrem vorderen Ende eine Fresnel-linse bildet, in deren Brennpunkt die Lichtquelle liegt.

Schließlich ist erfindungsgemäß vorgesehen, daß zur Wärmeableitung der in der Kappe ansammelnde Wärme eine Fenster daran vorgesehen ist.

Die Erfindung wird anhand von in der Zeichnung dargestellten Ausführungsformen näher erläutert. Es zeigen:

### [Zeichnung]

Figur 1 in perspektivischer Explosionsansicht einen erfindungsgemäßen Lampensatz für einen Kraftwagen mit drei nebeneinander angeordneten Lampen und den zugehörigen erfindungsgemäßen Hilfslichten,

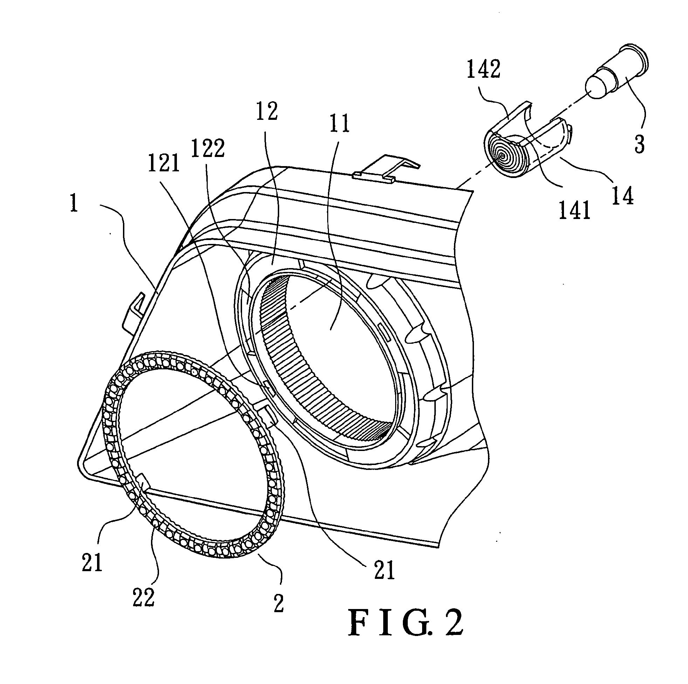

Figur 2 in perspektivischer Explosionsansicht ein erfindungsgemäßes Hilfslicht,
Figuren 3 und 4 zwei Möglichkeiten der erfindungsgemäßen Strukturierung der Umrandungsscheibe,

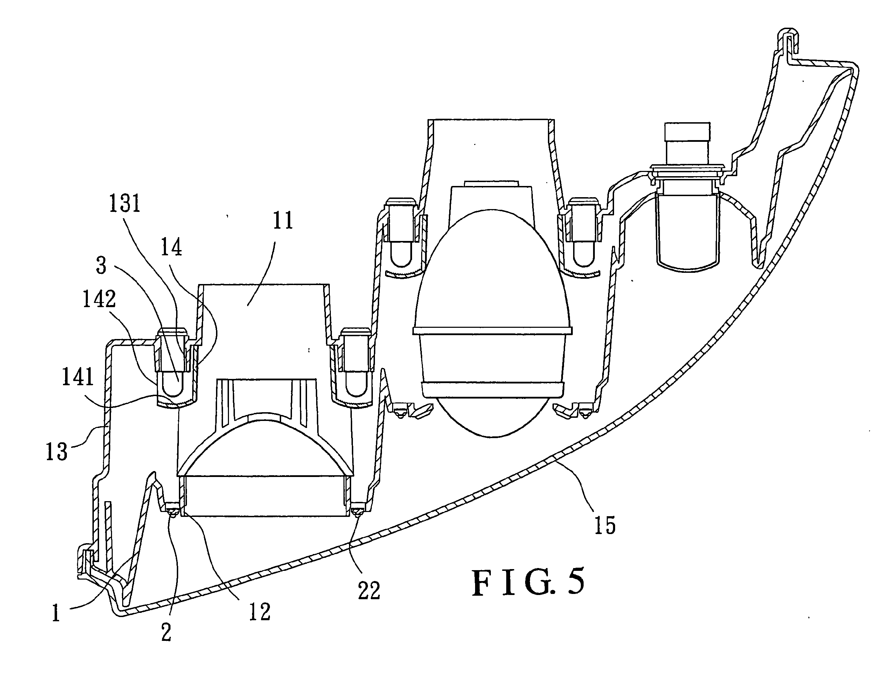

Figur 5 im Längsschnitt den erfindungsgemäßen Lampensatz in Figur 1,

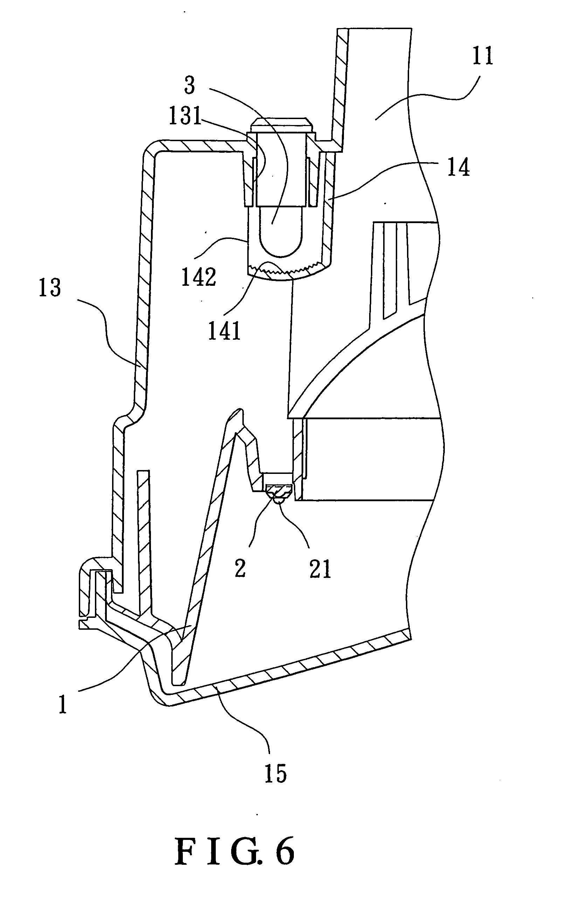

Figur 6 im vergrößerten Maßstab eine Lampe des Lampenstatz in Figur 5,

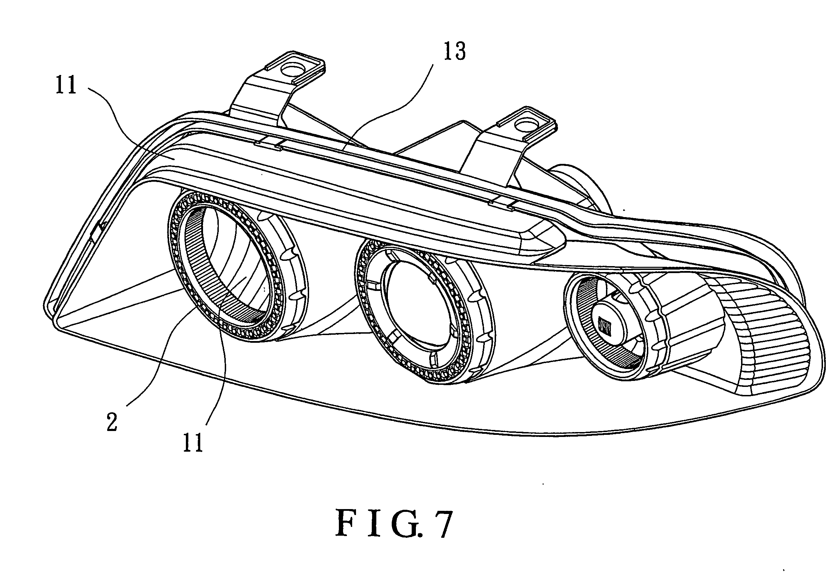

Figur 7 eine pespektivische Ansicht des erfindungsgemäßen Lampensatzes in Figur 1 im zusammengebauten Zustand,
Figur 8 eine perspektivische Explosionsansicht eines Hilfswarnungslichts nach dem Stand der Technik, und
Figur 9 eine perspektivische Ansicht einer Lampe eines Kraftwagens mit dem Hilfswarnungslicht in Figur 8.

### [Erläuterung der bevorzugten Ausführungsformen]

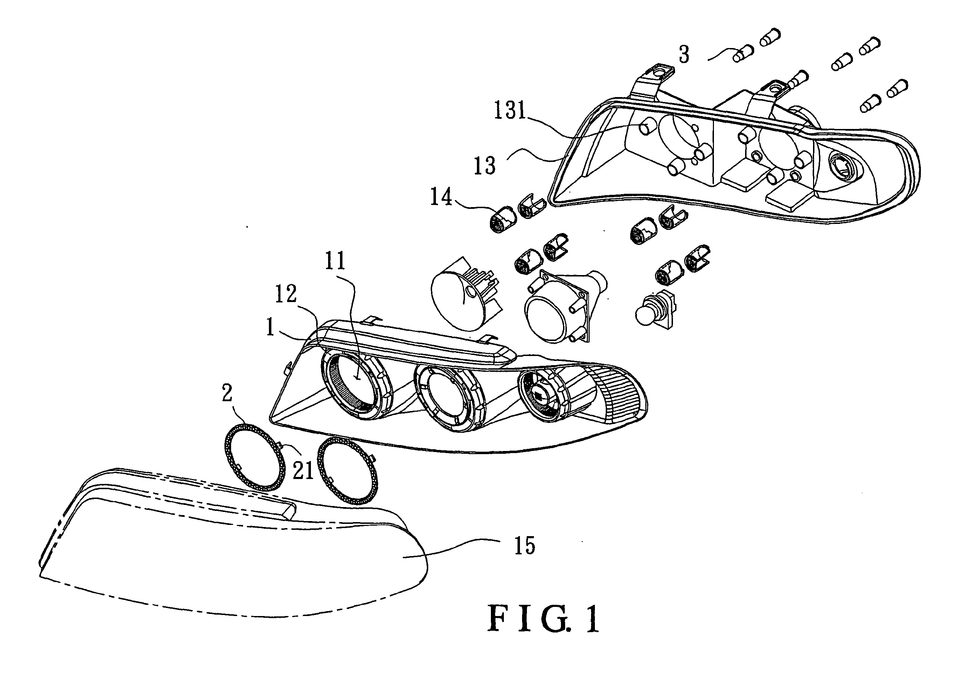

Figur 1 veranschaulicht einen Lampensatz mit drei Lampen, von denen jede mit einem sie umgebenden erfindungsgemäßen Hilfswarnungslicht versehen ist. Jedes Hilfswarnungslicht weist wie beim Stand der Technik eine ringförmige Umrandungsaufnahme 12 mit einer zentralen Öffnung 11 für eine Lampe, eine an der Stirnseite der Ümrandungsaufnahme 12 gehaltene Umrandungsscheibe 2 mit einer Strukturierung 22, und eine Anzahl (hier vier) eigene Lichtquellen 3 in Form eines LED's auf. Die Erfindung unterscheidet sich vom Stand der Techniki im wesentlichen darin, daß die Umrandungsaufnahmen 12 an einem gemeinen Lampenhalter 1 angeformt sind, der in einem Innenraum aufgenommen ist, der durch eine ihm vorgeordnete transparente Abdeckung 15 und einem ihm nachgeordneten Gehäuse 3 begrenzt wird, wobei das Gehäuse 13 an seiner dem Lampenhalter 1 zugewandten inneren Seite jeweils vier Fassungen 131 für die vier LED's 3 einer Lampe aufweist, während jede Umrandungsaufnahme 12 dementsprechend jeweils vier durchgebrochene Schlitze 122 für den Durchtritt der von Lichtquellen emittierten Lichtstrahlen aufweist. Zur Befestigung der Umrandungsscheibe 2 auf der Umrandungsaufnahme 12 weist die erstere zwei diametral gegenüberliegenden widerhakenförmige Rasthaken 21, die jeweils in einem an der Umrandungsaufnahme 12 angebrachten Rastloch 121 eingerastet werden.

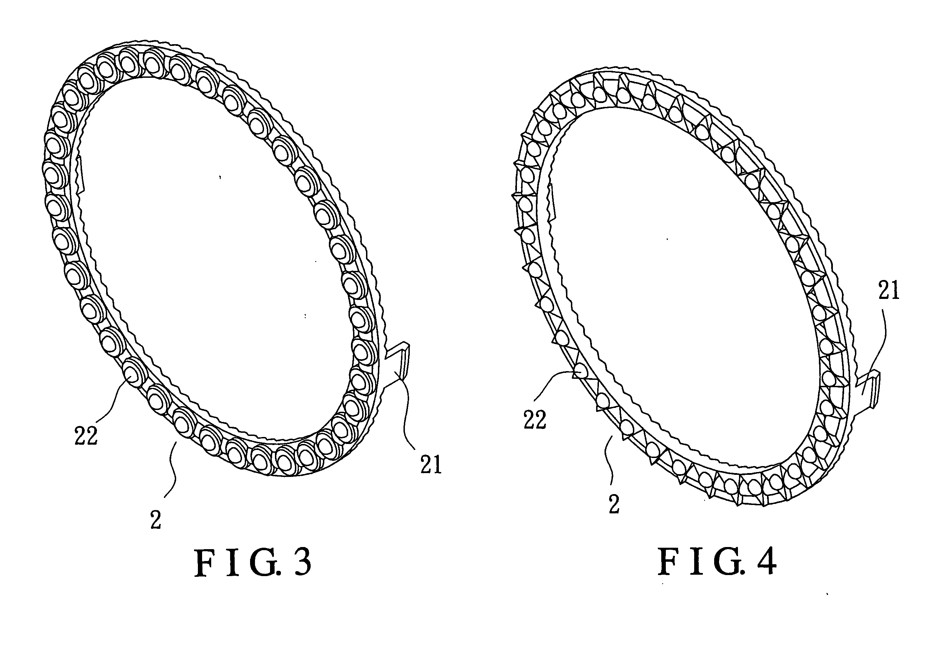

Das von der Lichtquelle 3 emittierte Licht tritt durch die Schlitze 122 hindurch und wird durch die Strukturierung 22 zu einem helligen ringförmigen Umrandungsbild über die Stirnseite der Umfangsscheibe 2 gestreut. Zur Verbesserung der Gleichmäßigkeit der Helligkeit ist erfindungsgemäß die Strukturierung durch eine Vielzahl von halbkugelförmigen Erhebungen 22 gebildet, die auf der der Umrandungsaufnahme 12 abgewandten Stirnseite der Umrandungsscheibe 2 mit gleichem Abstand zueinander angeordnet sind. Figuren 3 und 4 illustrieren in vergrößertem Maßstab zwei mögliche Ausbildungen solcher Strukturierung 22.

Um die von einer Lichtquelle 3 emittierten Lichtstrahlen parallel zur Lichtachse der Lampe zu fokusieren, ist jeweils eine lichtdurchlässige Kappe 14 für jede Lichtquelle 3 vorgesehen, die an ihrem Stirnende in bekannter Weise eine Fresnel-linse oder -einheit 141 aufweist, die derart ausgebildet und angeordnet ist, daß die Lichtquelle 3 gerade im Brennpunkt der Fresnel-linse 141 liegt. Hierdurch wird erreicht, daß die allen von der Lichtquelle 3 emittierten Lichtstrahlen nacu ihrem Durchtritt durch die Fresnel-linse 141 parallel zueinander fokusiert werden.

Um die Wärme der Lichtquelle 3 vom Inneren der Kappe 14 schnell abzuführen, weist diese ein Fenster 142 auf.

Di Erfindung hat gegenüber dem Stand der Technik die folgenden Vorteile:
1) Die Lichtquellen 3 sind lösbar in der Fassungen 131 gehalten. Deshalb ist bei einem Aufall oder einer Ströung einzelner Lichtquelle(n) 3 ein einzelner Wechsel derselben möglich.
2) Die von den Lichtquellen 3 emittierten Lichtstrahlen werden von hinten in axialer Richtung zur transparenten Umrandungsscheibe 2 hin, und nicht in Umfangsrichtung darin geleitet und überhaupt durch keine Gußmasse behindert, die für den dunklen Bereich des dadurch erzeugten Umrandungsbildes verantwortlich ist. Hierdurch wird ein gleichmäßig lichtendes ringförmiges Hilfswarnungsbild gewährleistet.
3) Wegen der Gleichmäßigkeit der Helligkeit des Lichtrings sind die Stellungen der Lichtquellen 3 von vorne nicht erkennbar, was die Ästhetik des Hilfslichts begünstigt.
4) Die Umfangsaufnahme 12 kann in ihrer Herstellung unmittelbar am Umfang eines Sockels der Lampe angeformt werden. Deshalb kann die Erfindung unabhängig der Ausführungen eines Kraftwagen weltweit eingesetzt werden.
5) Die Strukturierung 42 der Umrandungsscheibe kann in verschiedensten Gestalt und Form ausgeführt werden, wodurch die ästhetische Vielfältigkeit erheblich erhöht wird.

## Patentansprüche

1. Ein Hilfswarnungslicht für eine Lampe oder einen Lampensatz eines Kraftwagens, die oder deren jede Lampe jeweils ein sie umgebendes Hilfslicht aus einer Umrandungsaufnahme 12 mit einer zentralen Öffnung 11 für die Lampe, einer an der Stirnseite derselben gehaltenen lichtdurchlassigen Umrandungsscheibe 2 mit einer lichtstreuenden Strukturierung 22, und mindestens einer eigenen Lichtquelle 3 aufweist, **dadurch gekennzeichnet, daß** die Lampe oder der Lampensatz an einem Lampenhalter 1 gehalten ist, an dem die Umrandungsaufnahme 12 für die oder jede Lampe angeformt und der in einem Innenraum aufgenommen ist, der durch ein dem Lampenhalter 1 nachgeordnetes Gehäuse 13 und eine dem Lampenhalter 1 vorgeordnete lichtdurchlässige Abdeckung 15 umschlossen ist, wobei das Gehäuse 13 daran angeformte Fassungen 131 und die Umrandungsaufnahme 12 daran angebrachte Schlitzen 122 jeweils für die Lichtquellen aufweist.

2. Hilfswarnungslicht nach Anspruch 1, **dadurch gekennzeichnet, daß** die Strukturierung 22 aus einer Vielzahl von mit glechem Abstand voneinander auf der der Umrandungsaufnahme 12 abgewandten Seite der Umrandungsscheibe 2 angeordneten halbkugelförmigen Erhebungen 22 besteht.

3. Hilfswarnungslicht nach Anspruch 1, **dadurch gekennzeichnet, daß** jede der Lichtquellen 3 durch eine Kappe 14 umschlossen ist, die an ihrem vorderen Ende eine Fresneleinheit 141 aufweist, die derart ausgebildet und angeordnet ist, daß die Lichtquelle 3 im Brennpunkt der Fresneleinheit 141 liegt.

4. Hilfswarnungslicht nach Anspruch 1, **dadurch gekennzeichnet, daß** die Kappe 14 an ihrer Mantelfläche ein Fenster 14 zur Erhöhung der Wärmeableitung für die darin aufgenommene Lichtquelle 3 aufweist.
